Europäisches Patentamt

European Patent Office

Office européen des brevets

(19)

(11) Publication number: **0 014 575**
**B1**

# EUROPEAN PATENT SPECIFICATION

(12)

(45) Date of publication of patent specification: 02.03.83

(51) Int. Cl.³: **B 60 T 13/40, B 60 T 15/20**

(21) Application number: **80300309.4**

(22) Date of filing: **04.02.80**

(54) Trailer or semi-trailer vehicle braking apparatus.

(30) Priority: 08.02.79 GB 7904562

(43) Date of publication of application:
20.08.80 Bulletin 80/17

(45) Publication of the grant of the patent:
02.03.83 Bulletin 83/9

(84) Designated Contracting States:
BE DE FR IT LU NL SE

(56) References cited:
DE - A - 2 152 996
DE - A - 2 211 412
FR - A - 2 224 329
GB - A - 1 388 511
GB - A - 1 397 307

(73) Proprietor: BENDIX LIMITED
Douglas Road
Kingswood, Bristol BS15 2NL (GB)

(72) Inventor: Knight, David John
Bendix Ltd. Douglas Road Kingswood
Bristol BS15 2NL (GB)
Inventor: Lippiatt, Sidney Alan
Bendix Ltd. Douglas Road Kingswood
Bristol BS15 2NL (GB)

(74) Representative: Turner, Alan Reginald
c/o Bendix Limited Douglas Road
Kingswood, Bristol BS15 2NL (GB)

Courier Press, Leamington Spa, England

Trailer or semi-trailer vehicle braking apparatus

This invention relates to fluid pressure braking apparatus for trailers or semi-trailers of tractor/trailer vehicle combinations.

In tractor/trailer vehicle combinations, it has been proposed to provide trailer braking control from the towing vehicle by means of two connections between the towing vehicle and the trailer. One of these connections supplies a normal service or secondary braking control pressure to a trailer relay valve and the other connection provides a source of fluid pressure for charging the trailer reservoir or reservoirs and also constitutes an emergency line if fractured. Assuming that the trailer reservoir is already charged, collapse of emergency line pressure causes trailer brakes to be automatically applied regardless of the value of the control pressure in the control pressure connection. In order to achieve such a manner of operation, it is customary to employ a so-called relay emergency valve on the trailer via which the trailer reservoir is charged from the emergency line and which has one piston area responsive to the control pressure and another piston area which overrides the action of the first piston area in the event of the emergency line pressure collapsing to effect the emergency brake application.

One such trailer braking system is described and illustrated on pages 114 and 115 of a book entitled "Air Brake Technology" published by M. N. Homewood in 1977.

In order to provide two independent sources of braking force on a trailer, one of which remains operable to provide residual braking even in the event of the other ceasing to become effective, it has been proposed, for example, in GB-A-1,397,307, to provide two separate reservoirs on a two-line trailer chargeable from the emergency line via a two-circuit protection valve. In the circuit in which the relay emergency valve is provided, this charging takes place in the previously accepted manner also via the relay emergency valve and a check valve is provided to bypass the protection valve such as to enable the relay emergency valve to respond to collapse of the pressure in the emergency line to apply emergency braking.

A direct connection between the relay emergency valve and the emergency line cannot be provided to enable such a relay emergency valve to respond to any collapse of emergency line pressure because such a direct connection would, of course, nullify the benefit of the two-circuit protection valve. On the other hand, it is considered not desirable, from the point of view of guaranteed emergency brake operation, that flow of air under pressure from the relay emergency valve should have to flow via such a check valve.

According to the present invention, there is provided a trailer or semi-trailer vehicle fluid pressure braking apparatus for two-line operation including first and second relay valves responsive to the magnitude of fluid pressure in a first brake control line to apply braking pressure respectively from first and second reservoirs to independent brake pressure circuits, at least one said relay valve having a discrete fluid pressure-responsive area connected to a second supply/emergency line and being such that collapse of fluid pressure in the second line gives rise to an emergency brake application by the respective circuit regardless of the fluid pressure in the first line and characterised by the, or each, reservoir which is supplying a said at least one relay valve being connected directly to the second line for charging via respective circuit protection valve means.

In order that the invention may be more clearly understood and readily carried into effect, the same will be further described by way of example, with reference to the accompanying drawing of which:—

Figure 1 illustrates in diagrammatical form a two-line trailer braking system, and

Figure 2 illustrates a form of relay valve suitable for use in the circuit of Figure 1.

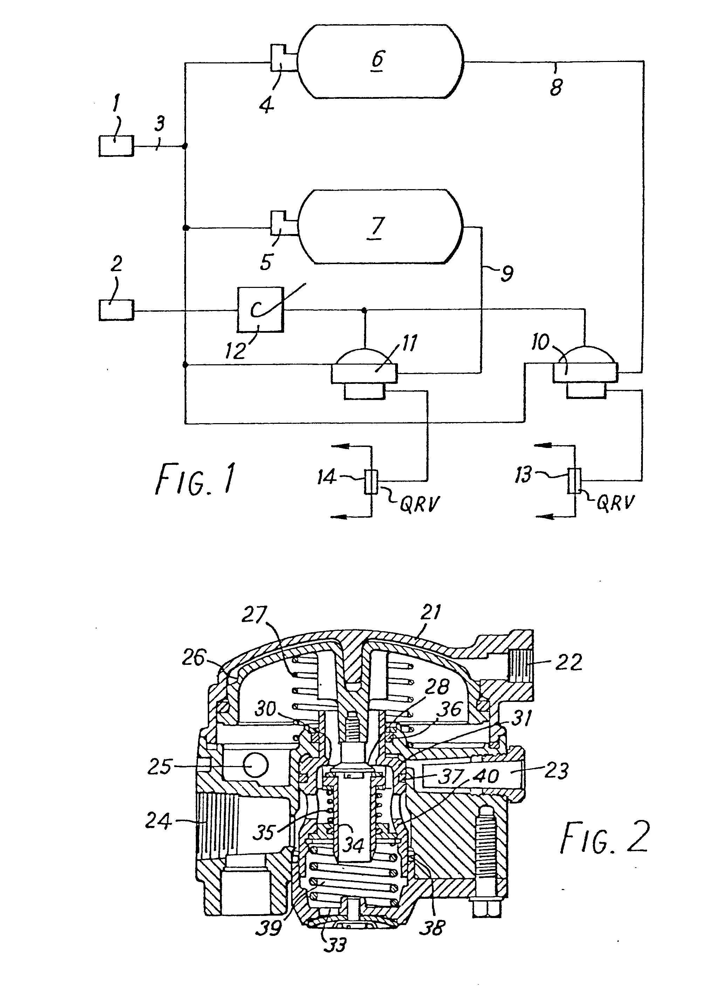

Referring to Figure 1, the circuit is provided with couplers 1 and 2 for connection respectively to the trailer emergency/supply line connection of the towing vehicle and the control line connection of the towing vehicle. The supply line 3 is connected via circuit protection valves 4 and 5 to respective reservoirs 6 and 7. These reservoirs have independent output connections 8 and 9 to respective relay valves 10 and 11 controlled in common by a connection via a variable load valve 12 to the trailer control line coupler. The relay valves 10 and 11 are provided with output lines to independent braking circuits via quick release valves 13 and 14 which may be connected to completely separate brake actuators, not shown, but acting on separate axles or, alternatively, may be connected to separate brake chambers of multi-diaphragm actuators on the same axle. The choice will depend upon the purpose of the system.

The circuit protection valves 4 and 5 are valves of known construction which, in the event of excessive loss of air from one circuit and its associated reservoir, nevertheless enables the continued re-charging and operation of the other reservoir and circuit.

The relay valves 10 and 11 are each provided with a further port for connection directly to the emergency or supply line 3.

The construction of the relay valves 10 and 11 will be more readily appreciated with reference to Figure 2. The valve shown in Figure 2 has a main housing 21, a control pressure port 22, an emergency/supply line pressure port 23 and a reservoir port 24. The delivery port faces out of the plane of the drawing and is represented at 25. The service port is connected to one side of a control piston 26 which is biassed upwards by a spring 27. The underside of the piston 26 is connected to the delivery port 25. The supply port communicates with the upper area 31 of a central plunger 40 within which the valve itself is contained. The valve has an exhaust port 33 connection to which is closable by a member 28 projecting downwards from the control piston against a tubular sealingly slideable valve member spring-loaded by a spring 35 and which, when moved upwards, engages an inlet valve seat 30 formed within the plunger which is upwardly biassed by a spring 39. The plunger 40 is provided with three seals 36, 37, 38 to isolate the supply port from the region beneath the piston 26 and from the region beneath the plunger which is at atmospheric pressure.

Considering the operation of the relay valve of Figure 2, assuming a reservoir 6 or 7 is connected at the port 24, that the reservoir is fully charged, and, in addition, the pressure at the emergency/supply port 23 is at a pressure which is substantially equivalent to the charge pressure of the reservoir, the central plunger 40 is deflected downwards from the position shown by the emergency/supply line pressure such that the inlet valve will be closed and the exhaust valve will be open. That is, the valve will be in a position opposite to that which is shown. Under these conditions, a control line pressure applied to the port 22 can operate to deflect the control piston 26 downwardly to cause member 28 to clsoe the exhaust valve and deflect the member 38 downwards to unseat the inlet valve to permit pressure to flow from the reservoir at port 24 to the underside of the control piston and to the delivery port 25 until the pressure beneath the control piston counterbalances the control pressure. At this point, the inlet valve is reclosed by slight upward movement of the control piston. Thereafter, a reduction of control pressure will enable the region beneath the control piston and the control port 25 to be vented to release the brakes.

In the event of the supply line pressure at the port 23 collapsing due to uncoupling of 1 or a failure, the spring 39 acting under the plunger 40, immediately causes the plunger 40 to move up to the position shown against its upper stop. This has the effect of immediately opening the inlet valve 30 to enable reservoir pressure to be connected directly to the delivery port 25 independently of any pressure signal which may or may not be present in the control port 22.

Reverting to the circuit arrangement of Figure 1, having regard to the foregoing discussion of the operation of the relay valves 10 and 11, after coupling of the trailer to the tractor vehicle and connection of the couplers 1 and 2 to the respective emergency/supply line and the control line, the reservoirs, if uncharged, are immediately charged via the supply line to more-or-less equal pressures. Thereafter, a control pressure applied at the coupler 2 from the towing vehicle, after modulation by the variable load valve 12, dependent upon the loading on the trailer, causes the relay valves 10 and 11, each with its plunger 40 deflected downwards under the effect of the respective reservoir pressures, to operate in the manner discussed above with reference to Figure 2, to apply braking pressure via the quick release valves 13 and 14 to the respective actuators.

In the event of the trailer emergency/supply line breaking or failing for some reason, the resultant reduction of supply port pressure on each of the relay valves 10 and 11 has the effect of causing an immediate brake application.

In the event of a failure of one of the sources of supply provided by the independent reservoirs 6 and 7 on the trailer, or loss of pressure in the reservoir due to a failure in the circuit downstream of the reservoir, it will be appreciated that residual controlled braking is provided by the actuators connected to the circuit which has not failed. As before, in the event of loss of emergency/supply line pressure, residual emergency braking is provided by the still operative circuit.

Whilst in the foregoing, both of the relay valves 10 and 11 have been shown as a relay valve which is responsive to collapse of supply line pressure to advantageously provide for emergency braking by the respective actuators connected to 13 or 14, even if neither one circuit has failed, if desired, and it is acceptable to provide for emergency braking only in one of said independent circuits, one of said relay valves 10 or 11 may be replaced by a simple relay valve thereby reducing the overall cost of the system.

From the foregoing, it will be appreciated that the present invention has provided a relatively simple two-circuit two-line braking system for trailer vehicle operation providing independently charged reservoirs giving residual braking in the event of one source of braking pressure being lost and also enabling the provision of emergency braking without the need of one or more check valves for coupling the relay valves to the emergency/supply line.

## Claims

1. A trailer or semi-trailer vehicle fluid pressure braking apparatus for two-line operation including first and second relay valves (10, 11) responsive to the magnitude of fluid pressure in a first brake control line (2) to apply braking pressure respectively from first and second reservoirs (6, 7) to independent brake pressure circuits, at least one said relay valve having a discrete fluid pressure-responsive area (31) connected to a second emergency/supply line and being such that collapse of fluid pressure in the second line gives rise to an emergency brake application by the respective circuit regardless of the fluid pressure in the first line and characterised by the, or each, reservoir which is supplying a said at least one relay valve being connected directly to the second line for charging via respective circuit protection valve means (4, 5).

2. A braking apparatus as claimed in Claim 1, characterised by both said relay valves having a discrete fluid pressure-responsive area (31) connected to the second line, to give rise to an emergency application by the respective circuit regardless of the fluid pressure in the first line.

**Patentansprüche:**

1. Druckmittel-Fahrzeugbremsvorrichtung für einen Anhänger oder einen Sattelschlepperanhänger für Zweileitungsbetrieb, mit einem ersten und einem zweiten Relaisventil (10, 11), die auf die Höhe des Arbeitsmitteldruckes in einer ersten Bremssteuerleitung (2) ansprechen, um Bremsdruck von einem ersten bzw. einem zweiten Behälter (6, 7) an unabhängige Bremsdruckkreise anzulegen, wobei wenigstens eines der Relaisventile einen getrennten, auf Arbeitsmitteldruck ansprechenden Bereich (31) hat, der mit einer zweiten Notbremsleitung/Lieferleitung verbunden ist und derart ist, daß ein Zusammenbrechen des Arbeitsmitteldruckes in der zweiten Leitung dazu führt, daß unabhängig von dem Arbeitsmitteldruck in der ersten Leitung ein Bremsenanlegen für eine Notbremsung von dem betreffenden Kreis hervorgerufen wird, dadurch gekennzeichnet, daß der oder jeder Behälter, der das wenigstens eine Relaisventil speist, direkt mit der zweiten Leitung zum Füllen über eine betreffende Kreis-Schutzventil-einrichtung (4, 5) verbunden ist.

2. Bremsvorrichtung nach Anspruch 1, dadurch gekennzeichnet, daß beide Relaisventile einen getrennten, auf Arbeitsmitteldruck ansprechenden Bereich (31) haben, der mit der zweiten Leitung verbunden ist, um ein Bremsenanlegen für eine Notbremsung von dem betreffenden Kreis unabhängig von dem Arbeitsmitteldruck in der ersten Leitung hervorzurufen.

**Revendications**

1. Un dispositif de freinage à pression de fluide pour remorque ou semi-remorque prévu pour un fonctionnement avec deux canalisations comprenant des première et seconde valves-relais (10, 11) fonctionnant en réponse à la grandeur de la pression de fluide dans une première canalisation (2) de commande de frein pour appliquer une pression de freinage fournie respectivement par des premier et second réservoirs (6, 7) à des circuits de pression de frein indépendants, l'une au moins desdites valves-relais ayant une surface discrète (31) sensible à la pression de fluide reliée à une seconde canalisation d'alimentation/de sûreté et étant telle que la disparition de la pression de fluide dans la seconde canalisation provoque un serrage des freins de sécurité par le circuit respectif, quelle que soit la pression de fluide régnant dans la première canalisation, caractérisé par le fait que le réservoir ou chaque réservoir qui alimente ladite ou l'une desdites valves-relais est raccordé directement à la seconde canalisation pour être chargé par l'intermédiaire de moyens respectifs formant valve (4, 5) de protection de circuit.

2. Un dispositif de freinage selon la revendication 1, caractérisé en ce que lesdites valves-relais ont toutes deux une surface discrète (31) sensible à la pression raccordée à la seconde canalisation pour provoquer un serrage de sécurité par le circuit respectif quelle que soit la pression de fluide dans la première canalisation.

FIG. 1

FIG. 2